# EUROPEAN PATENT APPLICATION

(11) **EP 1 720 330 A1**
(43) Date of publication of application: **08.11.2006**
(21) Application number: 06004575.4
(22) Date of filing: 07.03.2006
(51) Int. Cl.: H04M 3/46

(54) **Call hunting group feature which makes use of presence information**

(30) Priority: 03.05.2005 US 677177 P; 26.10.2005 US 259555
(71) Applicant: Alcatel, 75008 Paris (FR)
(72) Inventor: Ozugur, Timucin, TX 75069 Fairview (US)
(74) Representative: Schäfer, Wolfgang

(57) **Abstract**

The application relates to the feature ''Call Hunting Group'' which in the prior art is provided by Private Branch Exchanges and Class 5 switches. From all the terminals in a hunting group a free terminal is identified and the incoming call is directed towards the free terminal. Each terminal is associated with a party. If however, the party associated with the free terminal to which the call is directed, is unavailable because he is for example away from his desk, the free terminal is ringing unnecessarily. This problem is solved in that the call hunting group is presence enabled. Thereby, presence information is used which comprises presence information of each party associated with the terminals forming the call hunting group. Then, a call server uses the presence information to identity available parties, also called presentities, and available terminals within the call hunting group associated with the available presentities, and directs an incoming communication session towards one of the available terminals.

## Description

### BENEFIT CLAIM UNDER 35 U.S.C. § 119(e)

This application claims the benefit of U.S. Provisional Application No. 60/677,177, filed May 3, 2005.

### BACKGROUND OF THE INVENTION

### Technical Field of the Invention

The present invention relates in general to a presence-based communication system, and in particular, to providing a presence enabled call hunting group.

### Description of Related Art

A common call feature currently provided by Private Branch Exchange (PBX) and Class 5 switches is the "Call Hunting Group" feature. A hunting group typically includes multiple members, each having one or more terminals (e.g., cell phone, desktop phone, PDA, computer terminal, etc.) to which an incoming call may be routed. For example, hunting groups can be associated with different organizational groups within an enterprise, such as customer service, information technology (IT) and administrative support. However, a hunting group may also include a single member with multiple terminals.

The hunting group feature enables routing of an incoming call received at the PBX or Class 5 switch to one of the terminals in the hunting group using a particular type of call scheduling. Various call scheduling options include rotary call scheduling, sequential call scheduling and broadcast call scheduling. Rotary call scheduling continuously rotates through the terminals within a hunt group until a free terminal is identified that can receive the call. Sequential call scheduling uses a priority list of terminals (i.e., predefined terminal order) to identify a free terminal. If no terminal is available, the sequential terminal ringing may be repeated or the call may be forwarded to a voice mail center. Broadcast call scheduling rings each terminal within the group simultaneously and routes the call to the first terminal that answers the call. If a call cannot be connected, the call is placed in a waiting queue and when a terminal becomes available to process the call, the call is redirected towards the free terminal.

However, if a member of a hunting group is "away from their desk," "in a meeting," "on another terminal or line" or otherwise unavailable to answer the call, depending on the particular type of call scheduling used, the unavailable member's terminal may still be rung until a specific amount of time has elapsed. Unnecessary ringing of terminals results in an inefficient usage of network resources, and produces excessive delays in call routing. For many enterprise groups, such as customer service and other service related groups, response time is an important factor in evaluating overall efficiency and customer satisfaction.

Therefore, what is needed is a hunting group feature that identifies available terminals within a call hunting group and directs incoming calls to the available terminals of the call hunting group.

### SUMMARY OF THE INVENTION

Embodiments of the present invention provide a call server for providing a presence enabled call hunting group. The call server includes an interface to a presence system that aggregates presence information indicating the availability of terminals within a group of terminals forming the presence enabled call hunting group and the availability of presentities within a group of presentities associated with the terminals in the presence enabled call hunting group from multiple presence sources. The interface extracts the presence information of the presentites and terminals associated with the presence enabled call hunting group and provides the presence information to a call processor. The call processor further receives a request for a communication session with the presence enabled call hunting group, identifies available presentities within the group of presentities from the presence information, identifies available terminals within the group of terminals that are associated with the available presentities from the presence information and directs the communication session to at least one of the available terminals.

Embodiments of the present invention further provide a communication system for providing a presence enabled call hunting group formed of a group of terminals associated with a group of presentities. The communication system includes a presence server for aggregating presence information indicating the availability of terminals within the group of terminals and the availability of presentities within the group of presentities from multiple presence sources. The communication system further includes a call server for receiving a request for a communication session with the presence enabled call hunting group. The call server retrieves the presence information of the presentities within the group of presentities and the terminals within the group of terminals from the presence server, identifies available presentities within the group of presentities from the presence information, identifies available terminals within the group of terminals that are associated with the available presentities from the presence information and directs the communication session to at least one of the available terminals.

In one embodiment, the presence server further maintains preference information for each of the presentities and/or terminals. The presence information provided to the call server is filtered using the preference information.

Embodiments of the present invention further provide a method for directing a communication session to a presence enabled call hunting group. The method includes receiving a request for a communication session with the presence enabled call hunting group and retrieving presence information indicating the availability of terminals within a group of terminals forming the presence enabled call hunting group and the availability of presentities within a group of presentities associated with the group of terminals aggregated from multiple presence sources. The method further includes identifying available presentities within the group of presentities from the presence information, identifying available terminals within the group of terminals that are associated with the available presentities from the presence information and directing the communication session to a select one of the available terminals.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary communications system for providing a presence enabled call hunting group, in accordance with embodiments of the present invention;
FIGURE 3 is a block diagram illustrating exemplary components of a call server for providing a presence enabled call hunting group, in accordance with embodiments of the present invention; and
FIGURE 4 is a flowchart illustrating an exemplary process for directing a communication session to a presence enabled call hunting group, in accordance with embodiments of the present invention.

### DETAILED DESCRIPTION OF THE DRAWINGS

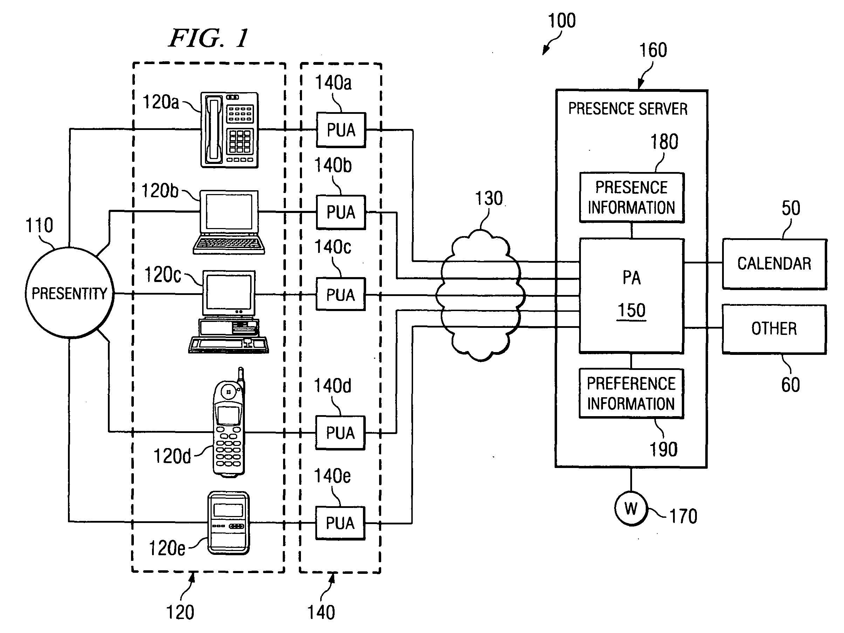

Referring to FIGURE 1, there is illustrated an exemplary presence system 100 capable of implementing various embodiments of the present invention. The presence system 100 includes a presentity 110 and one or more terminals 120 associated with the presentity 110. The presentity 110 represents the callee and provides presence information on the callee's presence status to the presence system 100. Each terminal 120 is a physical communications device capable of sending and/or receiving communications over a communications network 130. Examples of such terminals 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (e.g., circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110. In FIGURE 1, a separate PUA 140 is shown for each terminal 120. However, it should be understood that in other embodiments, the number of PUAs 140 can vary based on the number and type of terminals 120, the applications supported by the terminals 120 and the system configuration. Each PUA 140 represents a telephony application that independently generates a component of the overall presence information for a presentity 110. Typically, PUA 140 generates presence information when a change in presence status occurs. Examples of changes in presence status include, but are not limited to, turning on and off a terminal 120, modifying the registration from a terminal 120 and changing the instant messaging status on a terminal 120. As an example, when a presentity initiates or answers a phone call, the telephone application notifies the presence server to set the presentity's presence status to "On the Phone."

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. In addition, the PA 150 collects presence information from a calendar/scheduler application 50 (e.g., Microsoft Exchange Server®, IBM Lotus Notes®, Meeting Maker® or other similar application) and other sources 60 of presence information (e.g., an instant messaging application). For example, if a presentity has a meeting scheduled on his or her calendar from 10:00 a.m. to 12:00 p.m., at 10:00 a.m., the calendar/scheduler application 50 notifies the PA 150 to set the presentity's presence status to "In a Meeting."

The PA 150 aggregates the presence information from each of the sources (e.g., PUA's 140, calendar 50 and other sources 60) and maintains the current complete presence information for the presentity 110. The presence information 180 indicates, for example, the availability of the presentity, the current activity of the presentity, the local time where the presentity is located, the current location of the presentity and the current status of the active terminals and/or applications running on active terminals. The PA 150 is further operable to provide the presence information to one or more watchers 170 (callers or communication session initiators) who have subscribed to the presence service of the presentity 110.

The presence server 160 further stores preference information 190 (e.g., terminal preferences) for the presentities 110 and watchers 170 of the presence system 100. For example, the preference information 190 can include both presentity preference information (e.g., privacy filters) set by the presentity 110 for each watcher 170 and watcher preference information (e.g., watcher filters) set by each watcher 170 for presentities 110. The preference information 190 operates to filter the presence information 180 of a presentity 110 provided to a watcher 170 to accommodate privacy concerns, prioritization requirements, administrator policies and security considerations.

The presence server 160 is a physical entity that can operate as either the PA 150 or as a proxy server for routing requests from watchers 170 to the PA 150. The presence server 160 stores the presence information 180 and preference information 190 for a plurality of presentities 110 and watchers 170. Thus, the PA 150, in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

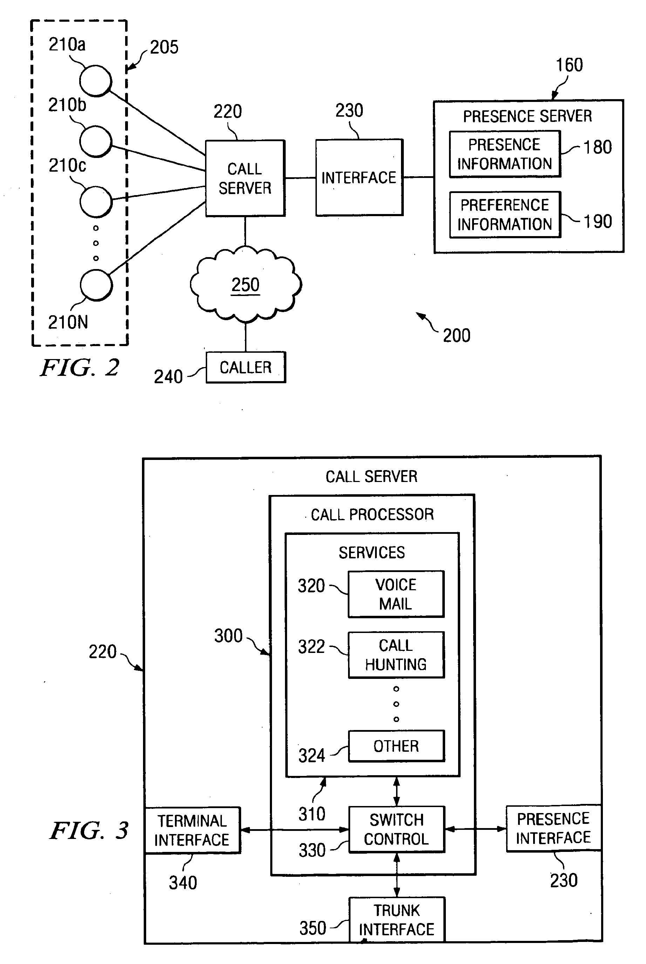

Referring now to FIGURE 2, there is illustrated an exemplary communication system 200 for providing a presence enabled call hunting group, in accordance with embodiments of the present invention. In FIGURE 2, a caller 240 sends a request for a communication session (e.g., real-time or non-real-time voice, text and multi-media (video+) communication sessions) with a hunting group 205 to a call server 220 through a communications network 250 (e.g., PSTN, PLMN, LAN, Internet, etc.). The call server 220 includes any device, such as a circuit switch, router, gateway or other switching device that routes media (voice, data, etc.) and/or converts media from the format required by one type of network to the format required by another type of network. For example, the call server 220 may be a private branch exchange (PBX) or Class 5 switch.

In response to receipt of the request, the call server 220 identifies a group of terminals 210a, 210b, 210c ... 210N forming the hunting group 205 and accesses the presence server 160 via interface 230 to retrieve the presence information 180 associated with each presentity (user) associated with one or more of the terminals 210a, 210b, 210c ... 210N in the hunting group 205 and the presence information 180 associated with each terminal 210a, 210b, 210c ... 210N in the hunting group 205. In one embodiment, each terminal 210a, 210b, 210c ... 210N is associated with a different presentity. In another embodiment, all of the terminals 210a, 210b, 210c ... 210N within the call hunting group 205 are associated with a single presentity. In yet another embodiment, two or more of the terminals 210a, 210b, 210c ... 210N are associated with a single presentity and the remaining terminals 210a, 210b, 210c ... 210N are associated with one or more presentities, such that each terminal 210a, 210b, 210c ... 210N is associated with only a single presentity.

The interface 230 is configured to construct requests for presence information to the presence server 160 and to provide presence information from the presence server 160 to the call server 220. The interface 230 includes any hardware, software, firmware, or combination thereof for interfacing between the call server 220 and the presence server 160. As an example, the interface 230 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

In one embodiment, the interface 230 is included within the presence server 160. In another embodiment, the interface 230 is a stand-alone system capable of accessing the presence server 160. In a further embodiment, the interface 230 is included within a telephony server, such as call server 220. For example, the interface 230 may be an application running on call server 220.

The presence server 160 aggregates presence information 180 of each presentity associated with terminals 210a, 210b, 210c ... 210N and aggregates presence information 180 of each terminal 210a, 210b, 210c ... 210N within the hunting group 205, and sends the aggregated presentity presence information 180, the aggregated terminal presence information 180, and in some embodiments, the associated preference information 190 back to the call server 220. In other embodiments, the presence server 160 filters the presence information 180 of each presentity and/or terminal using the preference information 190 and sends the aggregated and filtered presentity and/or terminal presence information 180 back to the call server 220. The call server 220 processes the returned presentity presence information 180 from the presence server 160 to determine the current presence state of each presentity associated with one or more of the terminals 210a, 210b, 210c ... 210N within the call hunting group 205. From the current presence state of each presentity, the call server 220 identifies one or more available presentities that are available for the requested communication session. Subsequently, the call server 220 determines the presence state of each terminal 210a, 210b, 210c ... 210N associated with the available presentities, and selects an available terminal 210a, 210b, 210c ... 210N associated with an available presentity to receive the communication session.

The current presence state of each presentity and terminal 210a, 210b, 210c ... 210N associated therewith is determined similarly, and therefore, only the determination of the presence state of terminal 210a and the presentity associated with terminal 210a will be discussed herein. To determine the current presence state of the presentity associated with terminal 210a, the call server 220 first determines the media status and availability of the presentity associated with terminal 210a for the requested communication session in the requested media type. If the presentity is available for the requested communication session in the requested media type, the call server 220 then determines the media status and availability of the particular terminal 210a for the requested communication session in the requested media type. As used herein, the term "media status" refers to one and only one of the following states at any particular time instance: INACTIVE, ACTIVE, IN USE, BUSY. In addition, as used herein, the term "availability" refers to one and only one of the following states at any particular time instance: AVAILABLE, UNAVAILABLE.

More specifically, the presence information 180, information identifying the media types supported by each terminal associated with the presentity, including terminal 210a, and information identifying the media types supported by each application running on each terminal associated with the presentity, are used to obtain the media type capabilities of the presentity. For example, the presence information 180 can include a current number of real-time voice communication sessions engaged in by the presentity, a current number of real-time multimedia communication sessions engaged in by the presentity and a current number of real-time text communication sessions engaged in by the presentity. Furthermore, in other embodiments, the presence information 180 can include an activity-media status mapping to update the media status of media types upon the start / termination of a scheduled activity, such as a meeting, out-to-lunch, steering a car, engaged in voice communication session etc. For example, the presentity associated with terminal 210a may enter preference data into the presence system specifying that no media types or only certain media types are available on any terminal of the presentity or particular terminals of the presentity (e.g., terminal 210a) when the presentity's calendar indicates that the presentity is in a meeting.

In exemplary embodiments, the call server 220 compares the current media status of the presentity associated with terminal 210a in the requested media type with preference information 190 specifying a maximum number of interactions per media type supported by the presentity into the presence system. In other embodiment, the presence server 160 performs this comparison. The maximum number of interactions for a particular media type indicates the maximum number of real-time interactions the presentity can handle before the particular media status enters the BUSY state. The maximum number of interactions is specified by the user/presentity as part of his/her preference rules. The maximum number of interactions specified in the preference information 190 may not be the same as the actual maximum number of interactions that the presentity is capable of supporting. For example, the presentity may have two terminals, each capable of supporting three IM communication sessions, two voice communication sessions and one multimedia communication session. However, the presentity may set the preference information 190 to limit the number of concurrent IM communication sessions to two (one for each terminal), and to prevent any multimedia communication sessions from being routed to any terminal of the presentity while the presentity is engaged in a voice communication session on either terminal.

From the maximum number of interactions in the preference information 190 and the presence information 180 provided by the presence server 160, the call server 220 determines the media status (INACTIVE, ACTIVE, IN USE or BUSY) and availability (AVAILABILE or UNAVAILABLE) of the presentity for the requested real-time communication session in the requested media type. For each media type, INACTIVE signifies that the user/presentity is not ready to process interactions with this specific media type. For example, the INACTIVE state applies when the presentity is not logged onto the network using any device capable of supporting that specific media type. In addition, the INACTIVE state might be caused by a conclusion that there are currently no active devices of the presentity that both support the requested media type and meet any other criteria specified by the caller 240. The ACTIVE state indicates that the user/presentity is ready to process interactions with this specific media type. For example, the ACTIVE state applies when at least one terminal of the presentity that supports the specific media type is logged onto the network.

For each media type, the IN USE state informs the call server 220 that the presentity is involved in one or more communication sessions using this specific media type. However, the presentity is still capable of processing additional interactions with the same media type on one or more terminals. For each media type, the BUSY state indicates that the presentity is not capable of engaging in any communication sessions with that media type on any terminal. For example, the BUSY state might be caused by limitations of resources (e.g., communication channels), by limitations of the presentity's capability (e.g., the maximum number of interactions for the specific media type has been reached) or by preferences specifying that the particular media type is unavailable when the presentity's calendar indicates that the presentity is in a meeting, traveling, off-site, etc.

If the presentity's media status in the requested media type is "INACTIVE" or "BUSY," the call server 220 determines that any terminal associated with that presentity is UNAVAILABLE for the requested communication session. Therefore, terminal 210a and any other terminal associated with that presentity that is within the call hunting group 205 would be deemed UNAVAILABLE for the incoming communication session. However, if the media status of the presentity is "ACTIVE" or "IN USE," the call server 220 determines that the presentity is currently AVAILABLE for the communication session. If the call server 220 determines that the presentity is AVAILABLE, the call server 220 next determines the media status and availability of each terminal associated with the presentity that is within the call hunting group 205.

Again, the call server 220 can compare the current media status of a particular terminal 210a of the presentity in the requested media type with preference information 190 specifying a maximum number of interactions per media type supported by the terminal 210a. For example, terminal 210a may be capable of simultaneously supporting unlimited text (e.g., IM) communication sessions, two voice communication session and one multimedia communication session, but the presentity may set his/her preference information 190 to limit the number of IM communication sessions to two, the number of voice communication sessions to one, and prevent any multimedia communication sessions while engaged in a voice communication on terminal 210a.

From the maximum number of interactions in the preference information 190 and the presence information 180 provided by the presence server 160, the call server 220 determines the media status (INACTIVE, ACTIVE, IN USE or BUSY) and availability (AVAILABILE or UNAVAILABLE) of the terminal 210a for the requested real-time communication session in the requested media type. For each media type, INACTIVE signifies that the terminal 210a is not capable of or ready to process interactions with this specific media type. The ACTIVE state indicates that the terminal 210 is capable of and ready to process interactions with this specific media type. The IN USE state informs the call server 220 that the terminal 210a is involved in one or more communication sessions using this specific media type. However, the terminal 210a is still capable of processing additional interactions with the same media type (i.e., there are additional communication channels to this terminal 210 in the requested media type), and the preference information 190 does not preclude additional interactions of this media type. The BUSY state indicates that the terminal 210a is not able to engage in any additional communication sessions with that media type (i.e., there are no more available communication channels to this terminal 210a in the requested media type).

If the media status of the terminal 210a in the requested media type is "INACTIVE" or "BUSY," the call server 220a determines that terminal 210a is UNAVAILABLE for the requested communication session. However, if the media status of the terminal 210a is "ACTIVE" or "IN USE," the call server 220 determines that terminal 210 is AVAILABLE for the communication session. Finally, if the call server 220 indicates that both the presentity associated with terminal 210a and terminal 210a are currently AVAILABLE for the communication session, the call server 220 includes terminal 210a in a list of available terminals in the call hunting group 205.

From the list of available terminals, the call server 220 proceeds to direct the communication session towards one of the available terminals 210a, 210b, 220c ... 210N using a particular type of call scheduling (e.g., rotary, sequential or broadcast). For example, assuming all terminals 210a, 210b, 210c ... 210N within call hunting group 205 and associated presentities are available, the call server 220 can use rotary call scheduling to ring the terminals 210a, 210b, 210c ... 210N in a rotary fashion until one of the terminals 210a, 210b, 210c ... 210N answers the call. As another example, the call server 220 can use sequential call scheduling to ring the terminals 210a, 210b, 210c ... 210N based on a predefined terminal order until one of the terminals 210a, 210b, 210c ... 210N answers the call. As a further example, the call server 220 can use broadcast call scheduling to ring each terminal 210a, 210b, 210c ... 210N within the group 205 simultaneously and direct the call to the first terminal that answers the call.

FIGURE 3 is a block diagram illustrating exemplary components of a call server 220 for providing a presence enabled call hunting group, in accordance with embodiments of the present invention. The call server 220 includes a call processor 300, a terminal interface 340, a trunk interface 350 and the presence interface 230. The call processor 300 further includes a switch controller 330 and provides various call services 310, such as voice mail 320, call hunting 322 and other services 324.

The switch controller 330 controls routing of messages and communication sessions between the terminal interface 340, trunk interface 350 and presence interface 230. For example, upon receiving an incoming communication session to a call hunting group via trunk interface 350, the switch controller 330 accesses the call hunting service 322 to identify the terminals within the hunting group and presentities associated with the terminals within the hunting group. The switch controller 330 then provides the terminal identities and associated presentity identities to the presence interface 230, which constructs a request for presence information related to the identified presentities and terminals to the presence server. When the presence interface 230 receives the requested presence information from the presence server, the presence interface 230 provides the received presence information to the switch controller 330.

The switch controller 330 then provides the received presence information to the call hunting service 322, which uses the presence information to identify available presentities and available terminals associated with available presentities in the call hunting group. The call hunting service 322 further provides terminal identities (e.g., PBX extensions) of the available terminals associated with the available presentities to the switch controller 330 for use in ringing the available terminals via terminal interface 340. The switch controller 330 can ring all available terminals associated with the available presentities simultaneously (e.g., using broadcast call scheduling) or can sequentially ring the available terminals associated with the available presentities (e.g., using rotary or sequential call scheduling). When a terminal answers, the switch controller 330 detects this through the terminal interface 340 and allocates resources (e.g., reserves trunk, channel and/or bandwidth resources) for the communication session via the trunk interface 350 and terminal interface 340.

The trunk interface 350, terminal interface 340 and switch controller 330 each include any hardware, software, firmware, or combination thereof. As an example, the switch controller 330 could include one or more processors that execute instructions and one or more memories that store instructions and data used by the processors. In addition, the call processor 300 is capable of executing the call services 310 and the switch controller 330 and includes one or more processing devices, such as microcontrollers, Field Programmable Gate Arrays (FPGAs), or Application Specific Integrated Circuits (ASICs), or a combination thereof.

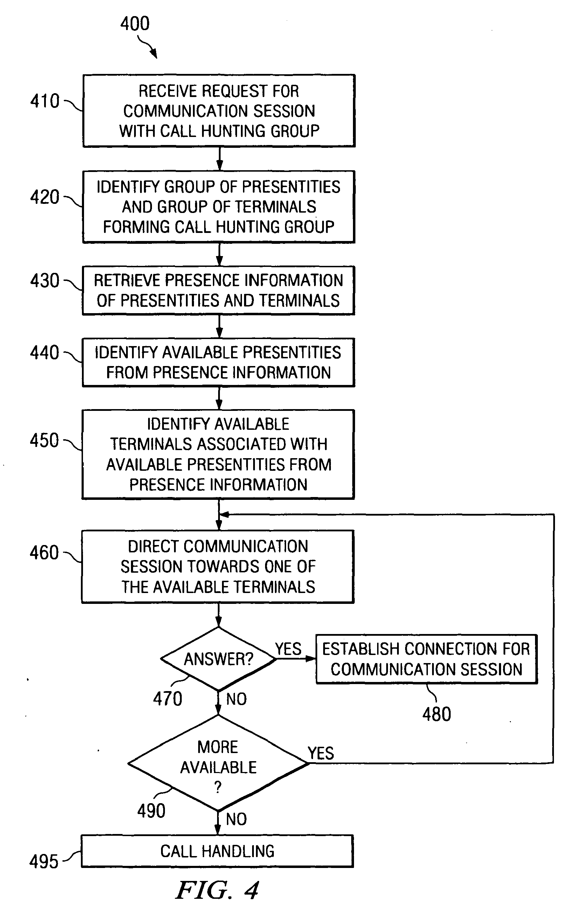

FIGURE 4 is a flowchart illustrating an exemplary process 400 for directing a communication session to a presence enabled call hunting group, in accordance with embodiments of the present invention. At block 410, a request for a communication session with a presence enabled call hunting group is received. At block 420, a group of terminals within the call hunting group and a group of presentities associated with the terminals in the call hunting group are identified. At block 430, the presence information for each presentity in the group of presentities and the presence information for each terminal in the group of terminals are retrieved. In exemplary embodiments, the presence information is aggregated from multiple presence sources (e.g., telephony sources, calendar sources and other sources). At block 440, available presentities in the group of presentities are identified from the presence information, and at block 450, available terminals in the group of terminals that are associated with the identified available presentities are identified from the presence information. At block 460, the communication session is directed towards at least one of the identified available terminals.

If, at block 470, the communication session is answered at an available terminal, at block 480, a connection for the communication session with the answering terminal is established. However, if at block 470, the communication session is not answered at an available terminal, a determination is made at block 490 whether there are additional available terminals to which the communication session was not previously directed. If so (Y branch of 490), the communication session is directed towards another one of the available terminals at block 460. If not (N branch of 490), call handling for the communication session is provided at block 495. For example, the communication session can be routed to voice mail, placed on hold, provided a busy signal, placed back in the queue to ring the available terminals again or handled using another applicable call handling feature.

The following features, separately or in any combination, may also constitute advantageous embodiments of the described or claimed invention:
- The claimed and/or described call server, wherein said group of terminals is associated with a single presentity;
- The claimed and/or described call server, wherein said group of terminals is associated with multiple presentities;
- A communication system for providing a presence enabled call hunting group formed of a group of terminals associated with a group of presentities, comprising: a presence server for aggregating presence information indicating the availability of terminals within said group of terminals and the availability of presentities within said group of presentities from multiple presence sources; and a call server connected to receive a request for a communication session with said presence enabled call hunting group, wherein said call server is operable to retrieve said presence information of said terminals and said presentities associated with said presence enabled call hunting group from said presence server, identify available ones of said presentities within said group of presentities from said presence information, identify available ones of said terminals within said group of terminals that are associated with said available presentities from said presence information and direct said communication session to at least one of said available terminals;
- The claimed and/or described communication system, wherein said multiple presence sources include a calendar application providing scheduling information for said presentities and a telephony application providing status information for use in determining a status of each of said presentities;
- The claimed and/or described communication system, wherein said multiple presence sources include a telephony application providing status information for use in determining a status of each of said terminals;
- The claimed and/or described communication system, wherein said status for each of said terminals in said group of terminals indicates inactive, active, in use or busy, and said call server determines that one of said terminals in said group of terminals is currently unavailable when said status of said respective terminal indicates inactive or busy;
- The claimed and/or described communication system, further comprising: an interface between said presence server and said call server that is operable to extract said presence information of said presentities and said terminals in said presence enabled call hunting group from said presence server and provide said presence information of said presentities and said terminals in said presence enabled call hunting group to said call server;
- The claimed and/or described communication system, wherein said interface is within said call server;
- The claimed and/or described communication system, wherein said presence server further maintains preference information for each of said presentities, wherein said presence server is further operable to filter said presence information provided to said call server using said preference information;
- The claimed and/or described method, wherein said status for each of said terminals in said group of terminals indicates inactive, active, in use or busy, and wherein said identifying said available terminals associated with said available presentities includes determining that one of said terminals in said group of terminals is currently unavailable when said status of said respective terminal indicates inactive or busy;
- The claimed and/or described method, wherein said receiving said presence information further includes receiving filtered presence information filtered using preference information associated with said presentities within said group of presentities and said terminals within said group of terminals.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A call server for providing a presence enabled call hunting group, comprising:
an interface to a presence system that aggregates presence information indicating the availability of terminals within a group of terminals forming said presence enabled call hunting group and the availability of presentities within a group of presentities associated with said terminals in said presence enabled call hunting group from multiple presence sources, wherein said interface is operable to extract said presence information of said presentites and said terminals associated with said presence enabled call hunting group; and
a call processor connected to receive a request for a communication session with said presence enabled call hunting group, wherein said call processor is operable to identify available ones of said presentities within said group of presentities associated with said presence enabled call hunting group and available ones of said terminals within said group of terminals that are associated with said available presentities from said presence information, wherein said call processor is further operable to direct said communication session to at least one of said available terminals.

2. The call server of Claim 1, wherein each of said terminals within said group of terminals is associated with a separate one of said presentities.

3. The call server of Claim 1, wherein said communication session is a real-time communication session or a non-real-time communication session.

4. The call server of Claim 3, wherein a media of said communication session includes voice, text or multimedia.

5. The call server of Claim 1, wherein said presence information received by said interface is filtered using preference information associated with said presentities within said group of presentities and said terminals within said group of terminals.

6. A method for directing a communication session to a presence enabled call hunting group, comprising the steps of:
receiving a request for a communication session with said presence enabled call hunting group;
retrieving presence information indicating the availability of terminals within a group of terminals forming said presence enabled call hunting group and the availability of presentities within a group of presentities associated with said group of terminals aggregated from multiple presence sources;
identifying available ones of said presentities within said group of presentities from said presence information;
identifying available terminals within said group of terminals that are associated with said available presentities from said presence information; and
directing said communication session to a select one of said available terminals.

7. The method of Claim 6, further comprising the steps of:
in response to unavailability of said select one of said available terminals, determining if there are additional ones of said available terminals; and
directing said communication session to one of said additional ones of said available terminals.

8. The method of Claim 7, further comprising the step of:
in response to unavailability of each of said available terminals, providing call handling for said communication session.

9. The method of Claim 6, further comprising the step of:
in response to availability of said select one of said available terminals, establishing a connection with said select one of said available terminals for said communication session.

10. The method of Claim 6, wherein said retrieving said presence information further includes receiving scheduling information for said presentities associated with said group of terminals and status information identifying a status for each of said terminals in said group of terminals.
